# EUROPEAN PATENT APPLICATION

(11) **EP 3 005 873 A1**
(43) Date of publication of application: **13.04.2016**
(21) Application number: 14804529.7
(22) Date of filing: 24.03.2014
(51) Int. Cl.: A01N 61/00, A01N 25/10, A01P 3/00, C08L 93/00, A01N 65/08

(54) **ANTIBACTERIAL COMPOSITION AND METHOD FOR PRODUCING SAME**

(30) Priority: 28.05.2013 JP 2013112415
(71) Applicant: Hitachi Zosen Corporation, Osaka-shi, Osaka 559-8559 (JP)
(72) Inventor: TAKENO, Shinya, Osaka-shi Osaka 559-8559 (JP); NAKAZAWA, Yoshihisa, Osaka-shi Osaka 559-8559 (JP); KAMEI, Motoo, Osaka-shi Osaka 559-8559 (JP)
(74) Representative: Schlich, George
(86) International application number: PCT/JP2014/058039
(87) International publication number: WO 2014/192388

(57) **Abstract**

Disclosed are an antibacterial composition and a method for producing the same. An antibacterial composition of the present invention contains a biopolymer derived from *Eucommia ulmoides* as an active ingredient. Such a biopolymer derived from *Eucommia ulmoides* can be obtained by, for example, biologically decaying *Eucommia ulmoides* to obtain a decomposition product of *Eucommia ulmoides* and washing the decomposition product of *Eucommia ulmoides.*

## Description

### Technical Field

The present invention relates to an antibacterial composition and a method for producing the same, and relates to a highly safe and environmentally friendly antibacterial composition and a method for producing the same.

### Background Art

With growing concerns for health and hygiene in present-day life, efforts have been made in recent years to impart antibacterial properties to various products. In particular, resin molded bodies are used as those products that a person may make direct contact with, the products including containers for holding products such as food and beverage, drinking water, and cosmetic; daily necessities such as toothbrushes, stationery, and consumer electronics; and building materials such as handrails and door handles. It is desired that these products have appropriate antibacterial properties.

To obtain a resin composition or a resin molded product having such antibacterial properties, for example, a technology in which an antibacterial agent is added to a predetermined resin component (Patent Document 1), a technology in which an organic antibacterial agent is used (Patent Document 2), and the like are known.

However, taking the application to a wide range of products into account, it is desired to develop a resin composition that ensures human safety and places a reduced burden on the environment while being capable of exhibiting predetermined antibacterial properties.

### Related Art Documents

### Patent Documents

Patent Document 1: Japanese Laid-Open Patent Publication No. 2005-132866
Patent Document 2: Japanese Laid-Open Patent Publication No. H11-236037

### Summary of the Invention

### Problem to be Solved by the Invention

The present invention has been made to solve the above-described problems, and it is an object thereof to provide an antibacterial composition that is highly safe and environmentally friendly and that is capable of exhibiting excellent antibacterial performance, and a method for producing thereof.

### Means for Solving the Problem

The present invention provides an antibacterial composition comprising a biopolymer derived from *Eucommia ulmoides* as an active ingredient.

In one embodiment, the biopolymer derived from *Eucommia ulmoides* has a weight-average molecular weight of 1 x 10³ to 5 x 10⁶.

In one embodiment, the biopolymer derived from *Eucommia ulmoides* is an elastomer that is obtained by biologically decaying *Eucommia ulmoides* to obtain a decomposition product of *Eucommia ulmoides* and washing the decomposition product of *Eucommia ulmoides.*

In a further embodiment, the washing is high pressure water washing.

In a further embodiment, the biopolymer derived from *Eucommia ulmoides* is a solvent-modified product obtained by extracting the elastomer with an organic solvent.

In a further embodiment, the biopolymer derived from *Eucommia ulmoides* is a heat-modified product obtained by heating the elastomer or the solvent-modified product at 75 °C to 130°C for 5 minutes or longer.

In a further embodiment, the *Eucommia ulmoides* is at least one part selected from the group consisting of seeds, pericarp, leaves, bark, and roots of *Eucommia ulmoides.*

In one embodiment, the antibacterial composition has an antibacterial effect against a Gram-negative bacterium, a Gram-positive bacterium, or an eumycete.

The present invention also provides a method for producing an antibacterial composition, which comprises:
biologically decaying *Eucommia ulmoides* to obtain a decomposition product of *Eucommia ulmoides*; and
washing the decomposition product of *Eucommia ulmoides.*

In one embodiment, the washing is high pressure water washing.

In a further embodiment, the method further comprises:
extracting an elastomer obtained by washing the decomposition product of *Eucommia ulmoides,* with an organic solvent to obtain a solvent-modified product.

In a further embodiment, the method further comprises:
heating the elastomer obtained by washing the decomposition product of *Eucommia ulmoides,* or the solvent-modified product at 75°C to 130°C for 5 minutes or longer to obtain a heat-modified product.

In one embodiment, the *Eucommia ulmoides* is at least one part selected from the group consisting of seeds, pericarp, leaves, bark, and roots of *Eucommia ulmoides.*

The present invention also provides a method for producing an antibacterial composition, which comprises:
extracting *Eucommia ulmoides* with an organic solvent to obtain an *Eucommia ulmoides* extract.

In one embodiment, the organic solvent is at least one solvent selected from the group consisting of toluene, chloroform, hexane, petroleum ether, petroleum benzine, and tetrahydrofuran.

In one embodiment, the method further comprises:
heating the *Eucommia ulmoides* extract at 75°C to 130°C for 5 minutes or longer to obtain a heat-modified product.

In one embodiment, the *Eucommia ulmoides* is at least one part selected from the group consisting of seeds, pericarp, leaves, bark, and roots of *Eucommia ulmoides.*

The present invention also provides a resin molded body that has been molded using the antibacterial composition and that has antibacterial properties.

### Effects of the Invention

According to the present invention, the antibacterial composition is capable of exhibiting excellent antibacterial performance, is highly safe for humans, and can reduce the burden on the environment when it is produced and disposed of. Moreover, according to the present invention, the antibacterial composition can be produced in a simple manner. Furthermore, large equipment is not required to produce the antibacterial composition of the present invention, and thus the antibacterial composition can be produced even in mountainous areas where material *Eucommia ulmoides* trees grow, for example. In addition, it is possible to apply the antibacterial composition of the present invention to various industrial products by making use of the elastomeric properties of the biopolymer derived from *Eucommia ulmoides,* which is an active component of the antibacterial composition.

### Description of Embodiments

Hereinafter, the present invention will be described in detail.

An antibacterial composition of the present invention contains a biopolymer derived from *Eucommia ulmoides* as an active ingredient.

The biopolymer derived from *Eucommia ulmoides* in the present invention refers to an elastomer that can be obtained from *Eucommia ulmoides.* In the present invention, the biopolymer derived from *Eucommia ulmoides* preferably has a weight-average molecular weight of 1 × 10³ to 5 × 10⁶, more preferably 1 × 10⁴ to 5 × 10⁶, and further more preferably 1 × 10⁵ to 5 × 10⁶. A biopolymer having such a high molecular weight has the properties as a solid elastomer and can be applied to various resin molding processes as an industrial raw material. In particular, a biopolymer obtained by high pressure washing is in fibrous form and contains fusion points of fibers.

The biopolymer derived from *Eucommia ulmoides* in the present invention can be obtained by, for example, biologically decaying *Eucommia ulmoides* to obtain a decomposition product of *Eucommia ulmoides* and washing this decomposition product of *Eucommia ulmoides.*

The biopolymer derived from *Eucommia ulmoides* of the present invention contains a trans-polyisoprenoid as a main component. The trans-polyisoprenoid has a higher molecular weight than a *Eucommia ulmoides* rubber that is obtained by a conventional solvent extraction method.

*Eucommia ulmoides* (*Eucommia ulmoides O.*) used to obtain the biopolymer derived from *Eucommia ulmoides* is a woody, tall tree. *Eucommia ulmoides* contains a trans-polyisoprenoid in its entire plant body, and any part can be used. The seeds and pericarp (both containing the trans-polyisoprenoid in an amount of about 20 % by weight or more), bark (12 % by weight or more), root (about 3 % by weight), and leaves (about 3 % by weight) of *Eucommia ulmoides* are preferably used because these parts abundantly contain the trans-polyisoprenoid. The seeds and pericarp are more preferably used. The fresh *Eucommia ulmoides* may be used, or processed *Eucommia ulmoides* such as dried *Eucommia ulmoides* may be used. In particular, with respect to the seeds and pericarp of *Eucommia ulmoides,* an oil expression residue of *Eucommia ulmoides* can be used, and this is preferable from the standpoint of effectively utilizing waste.

The antibacterial composition of the present invention contains, for example, 10 % by weight or more, preferably 30 % by weight to 100 % by weight, and more preferably 50 % by weight to 100 % by weight of the above biopolymer derived from *Eucommia ulmoides,* relative to the total weight of the antibacterial composition.

In addition to the above biopolymer derived from *Eucommia ulmoides,* the antibacterial composition of the present invention may also contain other polymers (e.g., isoprene rubber, styrene-butadiene rubber, butadiene rubber, polypropylene, polyethylene, phenolic resin, polystyrene, polyester, and/or polyamide) and/or other additives. Examples of the other additives include a coloring agent, a flame retardant, a lubricant, a filler, and a spreader, and a combination thereof.

Examples of the coloring agent include perylene dyes, coumarin dyes, thioindigo dyes, anthraquinone dyes, thioxanthone dyes, ferrocyanides such as Prussian blue, perinone dyes, quinoline dyes, quinacridone dyes, dioxazine dyes, isoindolinone dyes, organic colorants such as phthalocyanine dyes and carbon black, and a combination thereof.

Examples of the flame retardant include brominated flame retardants such as an oligomer of tetrabromobisphenol A; monophosphoric acid esters such as triphenyl phosphate and tricresyl phosphate; oligomeric, condensed phosphoric acid esters such as bisphenol A diphosphate; resorcinol diphosphate, and tetraxylenyl resorcinol diphosphate, phosphor-based flame retardants such as ammonium polyphosphate and red phosphor, and various silicone flame retardants. In order to improve the flame retardant properties even more, the flame retardant may also contain a metal salt of an aromatic sulfonic acid or a metal salt of perfluoroalkanesulfonic acid.

Examples of the lubricant include paraffin wax, n-butyl stearate, synthetic beeswax, natural beeswax, glycerol monoesters, montanic acid wax, polyethylene wax, and pentaerythritol tetrastearate, and a combination thereof.

Examples of the filler include calcium carbonate, clay, silica, glass fibers, glass balls, glass flakes, carbon fibers, talc, mica, and various whiskers, and a combination thereof.

The content of the above other additives in the present invention is not particularly limited. Any content can be chosen by those skilled in the art unless the antibacterial property of the above biopolymer derived from *Eucommia ulmoides* is inhibited.

For the antibacterial composition of the present invention, the above biopolymer derived from *Eucommia ulmoides* can be obtained using the method disclosed in Japanese Laid-Open Patent Publication No. 2009-221306, for example.

Next, an example of the method for producing an antibacterial composition according to the present invention will be described.

In the method according to the present invention, first, *Eucommia ulmoides* described above is biologically decayed.

That is to say, this biological decaying can be performed by, for example, bringing *Eucommia ulmoides* into contact with an organism that is capable of collapsing the tissue structure of *Eucommia ulmoides.* Here, the term "decay" as used herein refers to a state in which even though *Eucommia ulmoides* remains in its original shape, it is eroded by an organism such as a white rot fungus, and the tissue structure of *Eucommia ulmoides* can be easily collapsed when touched by hand. This decaying allows the tissue structure of *Eucommia ulmoides* to collapse, making it easy to separate a biopolymer derived from *Eucommia ulmoides* from the tissue by physical actions including the subsequent washing step.

There is no particular limitation on the above organism capable of collapsing the tissue structure of *Eucommia ulmoides* insofar as it can rot and decompose the tissues, cells, or intracellular components (e.g., metabolites) of *Eucommia ulmoides.* Examples thereof include wood-rotting fungi (including eumycete, slime fungi, and the like) such as white rot fungi, brown rot fungi, and soft rot fungi, microorganisms (such as *Bacillus subtilis* and actinomycetes), and insects (such as termites and ticks). These organisms may be used alone or in combination of two or more. For example, leaf mold may be used as a composite fungal flora of eumycete, slime fungi, actinomycete, and the like. For example, such leaf mold may occur between topsoil and floor vegetation in a forest of broadleaf trees including *Cinnamomum camphora, Quercus glauca, Castanopsis, Machilus thunbergii,* and the like. In the present invention, leaf mold is preferably used in that it can effectively rot the tissues of *Eucommia ulmoides* and is easily available.

The ratio of *Eucommia ulmoides* to the organism capable of collapsing the tissue structure of *Eucommia ulmoides* can be appropriately set with consideration given to factors such as the decaying time. For example, in the case where leaf mold is used, it is also possible to bring 30000 parts by weight of *Eucommia ulmoides* (pericarp) into contact with 1 part by weight of leaf mold. Examples of the method for bringing *Eucommia ulmoides* into contact with leaf mold include burying *Eucommia ulmoides* contained in a net bag or the like in the leaf mold; placing the leaf mold contained in a net bag or the like into an oil expression residue (seeds and pericarp) of *Eucommia ulmoides*; and supplying rinse water obtained by washing the leaf mold with water to *Eucommia ulmoides.*

There also is no particular limitation on the time for which and the temperature at which *Eucommia ulmoides* is brought into contact with the organism capable of collapsing the tissue structure of *Eucommia ulmoides.* With regard to the contact temperature, it is sufficient if the contact temperature is within a temperature range in which the organism is viable. The contact time is appropriately set depending on the amounts of organism and *Eucommia ulmoides,* the contact temperature, and the like. For example, in the case where the pericarp of *Eucommia ulmoides* is to be decayed in the forest floor of a broadleaf forest using leaf mold in the broadleaf forest, the decay period required is 2 weeks to 3 months and preferably 1 to 2 months.

In this manner, *Eucommia ulmoides* is biologically decayed, and thus a decomposition product of *Eucommia ulmoides* can be obtained.

The resulting decomposition product of *Eucommia ulmoides* is then washed. Adjunct substances, such as tissue mass, dried cells, primary metabolites, and secondary metabolites, in the decomposition product of *Eucommia ulmoides* can be removed from a polymer derived from *Eucommia ulmoides* by washing. Washing can be performed using, for example, water, aqueous solutions containing a surfactant (such as Tween (registered trademark)), and polar solvents (such as ethanol, methanol, and butanol) in which the polymer is not dissolved. In terms of the cost and also from the environmental point of view, water is preferably used.

There is no particular limitation on the method for washing insofar as the adjunct substances can be removed. For example, washing can be performed by appropriately repeating water washing and kneading (for example, 2 to 10 times and preferably 2 to 6 times). From the standpoint of efficiently removing the adjunct substances, it is preferable to perform washing under a high pressure, that is, under a pressure exceeding the normal pressure (10⁵ Pa). For example, washing may be performed using a high-pressure washer at a discharge pressure of 0.1 MPa to 15 MPa and preferably 2 MPa to 8 MPa and at a discharge rate of 300 L/hour to 400 L/hour. In the case where high pressure water washing is performed, a high-purity polymer derived from *Eucommia ulmoides* can be obtained in a shorter period of time than in the case where water washing and kneading are repeated.

After washing, the resulting polymer may be further subjected to alkali treatment. Alkali treatment makes it easy to remove lignin, phenol, and the like, allowing for further purification. Specifically, alkali treatment is performed by further washing the washed decomposition product of *Eucommia ulmoides* with a 0.1 N to 4 N aqueous solution of sodium hydroxide, or the like. There is no particular limitation on the washing method used for alkali treatment, and any method can be chosen by those skilled in the art.

As described above, after the decaying step and the washing step, an antibacterial composition composed of the biopolymer derived from *Eucommia ulmoides* can be obtained. With respect to such an antibacterial composition composed of the biopolymer derived from *Eucommia ulmoides,* the yield of the biopolymer from dried *Eucommia ulmoides* is, for example, 20 % by weight or more and preferably about 22 % by weight to 35 % by weight, relative to the weight of the dried *Eucommia ulmoides.*

The biopolymer derived from *Eucommia ulmoides* contained in the antibacterial composition of the present invention contains a trans-isoprenoid as a main component and may also contain cellulose as necessary. The content of trans-isoprenoid in the biopolymer derived from *Eucommia ulmoides* is preferably 50 % by weight or more, more preferably 60 % by weight or more, still more preferably 70 % by weight or more, yet more preferably 90 % by weight or more, and most preferably 95 % by weight or more, relative to the total weight of the biopolymer. The content can also be 100 % by weight. Furthermore, the biopolymer derived from *Eucommia ulmoides* is a hard rubber, has a high surface hardness, and has various excellent properties such as thermoplasticity, electrical insulation, acid resistance, and alkali resistance.

In the case where the biopolymer derived from *Eucommia ulmoides* contained in the antibacterial composition of the present invention contains cellulose, the biopolymer is configured as a mixed rubber of the trans-isoprenoid and cellulose. Such a mixed rubber can be obtained by, for example, performing alkali treatment after the above washing step.

It should be noted that the biopolymer constituting the antibacterial composition of the present invention may further include a modified product of the biopolymer derived from *Eucommia ulmoides* obtained as described above. For example, solvent dissolution processing, heat dissolution processing, and the like can be performed as this modification processing. Solvent dissolution processing may be performed by, for example, dissolving the biopolymer derived from *Eucommia ulmoides* obtained as described above in an organic solvent such as toluene, chloroform, or formaldehyde or a mixed solvent thereof, then drying the resulting solution, and removing the solvent by distillation, thereby obtaining a solvent-modified product. Heat dissolution processing may be performed by, for example, heating the biopolymer derived from *Eucommia ulmoides* or the above solvent-modified product at 75°C to 130°C for 5 minutes or longer, thereby obtaining a heat-modified product. The modification processing as described above can provide an antibacterial composition composed of a polymer that is smooth and has a soft feel to the touch, for example.

If necessary, the other additives described above may be added to the biopolymer derived from *Eucommia ulmoides* obtained as described above using a means and a method known to those skilled in the art, and mixed to uniformity, for example.

In this manner, the antibacterial composition of the present invention can be obtained.

Alternatively, the antibacterial composition of the present invention can also be produced in the following manner. Another example of the method for producing an antibacterial composition of the present invention will be described below.

First, *Eucommia ulmoides* is extracted with an organic solvent to give an *Eucommia ulmoides* extract.

In the other production method, similarly to the above-described method, for example, the seeds, pericarp, leaves, bark, and roots of *Eucommia ulmoides* or a combination thereof can be used as *Eucommia ulmoides.*

There also is no particular limitation on the organic solvent that can be used; however, for example, toluene, chloroform, hexane, petroleum ether, petroleum benzine, or tetrahydrofuran or a mixed solvent thereof can be used. After extraction with the organic solvent, the solvent is removed from the extract solution by distillation using a means well known to those skilled in the art, and the *Eucommia ulmoides* extract is thus generated.

It should be noted that the *Eucommia ulmoides* extract obtained by the above other production method may also be further heated, for example, at 75°C to 130°C for 5 minutes or longer to form a heat-modified product, which can be used as the antibacterial composition. Such modification processing by heating can provide an antibacterial composition composed of a polymer that is smooth and has a soft feel to the touch, for example.

Furthermore, if necessary, the other additives described above may be added to the *Eucommia ulmoides* extract or the heat-modified product using a means and a method known to those skilled in the art, and mixed to uniformity, for example.

In this manner, the antibacterial composition of the present invention can be obtained.

The antibacterial composition of the present invention may be added as a kind of resin additive to other resin components to which it is desired to impart antibacterial properties, for example, or the antibacterial composition of the present invention may be used by itself as a resin composition having antibacterial properties without any treatment.

The antibacterial composition of the present invention can be used for those resin molded bodies that a person may make direct contact with, the resin molded bodies including, for example, containers for holding products such as food and beverage, drinking water, and cosmetic; daily necessities such as toothbrushes, stationery, and consumer electronics; and building materials such as handrails and door handles.

The antibacterial composition of the present invention and the resin molded body obtained by using the antibacterial composition and having antibacterial properties have an antibacterial effect against Gram-negative bacteria, Gram-positive bacteria, or eumycete, for example.

### Examples

Hereinafter, the present invention will be more specifically described by means of examples. However, the present invention is not limited by the examples.

### (Example 1: Production of antibacterial composition)

First, 1 kg of an *Eucommia ulmoides*-derived oil expression residue (containing the seeds and pericarp of *Eucommia ulmoides*) was placed in a net bag (a nylon bag with 2 mm square meshes), buried in a leaf mold layer (depth of about 5 cm from the ground surface) in a broadleaf forest (including *Cinnamomum camphora, Castanopsis, Machilus thunbergii,* and the like), and left for 2 months. The *Eucommia ulmoides* in the net bag was examined for collapsing easily when touched by hand to confirm the decay, and then washed with water to give a roughly purified product of *Eucommia ulmoides* rubber.

Furthermore, the roughly purified product was washed with water at a discharge pressure of 0.2 MPa to 0.9 MPa and a discharge rate of 370 L/hour to obtain a biopolymer derived from *Eucommia ulmoides.* The amount of this biopolymer produced was 0.3 kg, that is, the yield was about 30%. It should be noted that the work time required to obtain the biopolymer derived from *Eucommia ulmoides* from the above roughly purified product was about 1 hour.

The obtained biopolymer derived from *Eucommia ulmoides* was subjected to size exclusion chromatography (SEC) to determine the average molecular weight, and was found to have a number-average molecular weight (Mn) of 6.6 × 10⁴, a weight-average molecular weight (Mw) of 1.25 × 10⁵, and a polydispersity index (Mw/Mn) of 1.9.

The obtained biopolymer derived from *Eucommia ulmoides* was subjected to ¹H-NMR analysis, and it was confirmed that the biopolymer was a high-purity (about 95% or higher) trans-isoprenoid with few contaminants.

The biopolymer derived from *Eucommia ulmoides* obtained in this example was used as an antibacterial composition without adding any other additives.

### (Example 2: Production of antibacterial composition 2)

First, 10 g of the antibacterial composition (biopolymer derived from *Eucommia ulmoides*) obtained in Example 1 was added to 1 L of toluene, followed by stirring, and a toluene-soluble portion was collected. Toluene in the obtained toluene-soluble portion was removed by distillation, and thus a purified elastomer was obtained.

The purified elastomer obtained in this example was used as an antibacterial composition without adding any other additives.

### (Example 3: Evaluation of antibacterial properties of antibacterial composition)

The antibacterial composition obtained in Example 1 was masticated using an open roll mill, and the resulting masticated product was shaped by hot-pressing to prepare test pieces in accordance with the JIS Z2801 standard.

With respect to the obtained test pieces, the number of viable cells of *Escherichia coli, Staphylococcus aureus*, and *Cladosporium cladosporioides* at the beginning (at the start of the test) and after 24 hours was determined according to JIS Z2801 (Antibacterial products -- Test for antibacterial activity and efficacy). Similarly, polyethylene, which is a general-purpose resin, was used to prepare test pieces serving as controls, and the number of viable cells of each of the inoculated bacteria at the beginning and after 24 hours was determined. Furthermore, antibacterial activity values were calculated according to the same JIS Z2801 standard.

Table 1 shows the obtained results.

**Table 1**

| Inoculated Bacteria | Test Piece | Number of Viable Cells at Beginning | Number of Viable Cells after 24 hrs. | Antibacterial Activity Value |
|---|---|---|---|---|
| *Escherichia coli* | Test Piece obtained from Example 1 | 1.2×10⁵ | <10 | 6.2 |
| | Control | 1.2×10⁵ | 1.9×10⁷ | |
| *Staphylococcus aureus* | Test Piece obtained from Example 1 | 1.7×10⁵ | <10 | 4 |
| | Control | 1.7×10⁵ | 1.2×10⁵ | |
| *Cladosporium cladosporioides* | Test Piece obtained from Example 1 | 2.0×10⁵ | 5.2×10² | 2.4 |
| | Control | 2.0×10⁵ | 1.6×10⁵ | |

| | | | | |
|---|---|---|---|---|
| Unit: CFU/piece | | | | |

As shown in Table 1, the antibacterial activity values of the antibacterial composition obtained in Example 1 were significantly larger than 2.0, which is regarded as being a threshold of effectiveness, with respect to all of the inoculated bacteria. This shows that the antibacterial composition obtained in Example 1 had excellent antibacterial performance with respect to all of *Escherichia coli, Staphylococcus aureus,* and *Cladosporium cladosporioides.*

### (Example 4: Evaluation of antibacterial properties of antibacterial composition 2)

Test pieces were prepared in the same manner as in Example 3 except that the antibacterial composition obtained in Example 1 was replaced with the antibacterial composition 2 obtained in Example 2, and determination of the number of viable cells at the beginning (at the start of the test) and after 24 hours was performed with respect to each of the inoculated bacteria according to JIS Z2801. Similarly, determination of the number of viable cells after 24 hours with respect to controls was performed. Furthermore, antibacterial activity values were calculated according to the same JIS Z2801 standard.

Table 2 shows the obtained results.

**Table 2**

| Inoculated Bacteria | Test Piece | Number of Viable Cells at Beginning | Number of Viable Cells after 24 hrs. | Antibacterial Activity Value |
|---|---|---|---|---|
| *Escherichia coli* | Test Piece obtained from Example 2 | 1.6×10⁵ | <10 | 6.1 |
| | Control | 1.6×10⁵ | 1.3×10⁷ | |
| *Staphylococcus aureus* | Test Piece obtained from Example 2 | 1.4×10⁵ | <10 | 4.3 |
| | Control | 1.4×10⁵ | 2.4×10⁵ | |
| *Cladosporium cladosporioides* | Test Piece obtained from Example 2 | 2.0×10⁵ | 1.6×10² | 0.9 |
| | Control | 2.0×10⁵ | 1.4×10⁵ | |

| | | | | |
|---|---|---|---|---|
| Unit: CFU/piece | | | | |

As shown in Table 2, the antibacterial activity values with respect to *Escherichia coli* and *Staphylococcus aureus,* of the antibacterial composition obtained in Example 2 were significantly greater than 2.0, which is regarded as being a threshold of effectiveness. The antibacterial activity with respect to *Cladosporium cladosporioides* was relatively low; however, the antibacterial composition obtained in Example 2 showed excellent antibacterial performance when compared with the controls.

### Industrial Applicability

According to the present invention, it is possible to provide a resin molded body that has antibacterial properties and that reduces the burden on the environment when it is produced and disposed of. The utilization of the elastomeric properties of the biopolymer derived from *Eucommia ulmoides,* which is an active ingredient of the antibacterial composition of the present invention, makes the antibacterial composition useful in production of various industrial products.

## Claims

1. An antibacterial composition comprising a biopolymer derived from *Eucommia ulmoides* as an active ingredient.

2. The antibacterial composition of claim 1, wherein the biopolymer derived from *Eucommia ulmoides* has a weight-average molecular weight of 1 × 10³ to 5 × 10⁶.

3. The antibacterial composition of claim 1 or 2, wherein the biopolymer derived from *Eucommia ulmoides* is an elastomer that is obtained by biologically decaying *Eucommia ulmoides* to obtain a decomposition product of *Eucommia ulmoides* and washing the decomposition product of *Eucommia ulmoides.*

4. The antibacterial composition of claim 3, wherein the washing is high pressure water washing.

5. The antibacterial composition of claim 3 or 4, wherein the biopolymer derived from *Eucommia ulmoides* is a solvent-modified product obtained by extracting the elastomer with an organic solvent.

6. The antibacterial composition of any of claims 3 to 5, wherein the biopolymer derived from *Eucommia ulmoides* is a heat-modified product obtained by heating the elastomer or the solvent-modified product at 75°C to 130°C for 5 minutes or longer.

7. The antibacterial composition of any of claims 3 to 6, wherein the *Eucommia ulmoides* is at least one part selected from the group consisting of seeds, pericarp, leaves, bark, and roots of *Eucommia ulmoides.*

8. The antibacterial composition of any of claims 1 to 7, wherein the antibacterial composition has an antibacterial effect against a Gram-negative bacterium, a Gram-positive bacterium, or an eumycete.

9. A method for producing an antibacterial composition, which comprises:
biologically decaying *Eucommia ulmoides* to obtain a decomposition product of *Eucommia ulmoides*; and
washing the decomposition product of *Eucommia ulmoides.*

10. The method of claim 9, wherein the washing is high pressure water washing.

11. The method of claim 9 or 10, further comprising:
extracting an elastomer obtained by washing the decomposition product of *Eucommia ulmoides,* with an organic solvent to obtain a solvent-modified product.

12. The method of any of claims 9 to 11, further comprising:
heating the elastomer obtained by washing the decomposition product of *Eucommia ulmoides,* or the solvent-modified product at 75°C to 130°C for 5 minutes or longer to obtain a heat-modified product.

13. The method of any of claims 9 to 12, wherein the *Eucommia ulmoides* is at least one part selected from the group consisting of seeds, pericarp, leaves, bark, and roots of *Eucommia ulmoides.*

14. A method for producing an antibacterial composition, which comprises:
extracting *Eucommia ulmoides* with an organic solvent to obtain an *Eucommia ulmoides* extract.

15. The method of claim 14, wherein the organic solvent is at least one type of solvent selected from the group consisting of toluene, chloroform, hexane, petroleum ether, petroleum benzine, and tetrahydrofuran.

16. The method of claim 14 or 15, further comprising the step of:
heating the *Eucommia ulmoides* extract at 75°C to 130°C for 5 minutes or longer to obtain a heat-modified product.

17. The method of any of claims 14 to 16, wherein the *Eucommia ulmoides* is at least one part selected from the group consisting of seeds, pericarp, leaves, bark, and roots of *Eucommia ulmoides.*

18. A resin molded body that has been molded using the antibacterial composition of any of claims 1 to 8 and that has antibacterial properties.
